# EUROPÄISCHE PATENTSCHRIFT

(11) **EP 2 985 164 B1**
(45) Veröffentlichungstag und Bekanntmachung des Hinweises auf die Patenterteilung: **04.10.2017**
(21) Anmeldenummer: 15179701.6
(22) Anmeldetag: 04.08.2015
(51) Int. Cl.: B60K 5/12, F16F 1/38

(54) **MOTORTRÄGER**
MOTOR MOUNT
SUPPORT DE MOTEUR

(30) Priorität: 07.08.2014 DE 102014215641
(43) Veröffentlichungstag der Anmeldung: 17.02.2016
(73) Patentinhaber: Joma-Polytec GmbH, 72411 Bodelshausen (DE)
(72) Erfinder: Heinz, Stefan, 72411 Bodelshausen (DE); Vollmer, Oliver, 72108 Rottenburg (DE)
(74) Vertreter: DREISS Patentanwälte PartG mbB

(56) Entgegenhaltungen:
- EP-A1- 2 119 937
- EP-A2- 1 281 887
- WO-A1-2014/030748
- DE-A1- 4 335 510
- DE-A1- 19 654 189
- DE-A1-102010 024 903
- DE-A1-102012 014 477
- JP-A- H09 170 635
- US-A1- 2009 166 506
- US-A1- 2010 032 542
- US-A1- 2011 121 157

## Beschreibung

Die Erfindung betrifft einen Motorträger zum Befestigen eines Motors in einem Kraftfahrzeug, wobei der Motorträger einen Grundkörper aufweist, der einen Anschlussbereich zur Anlage eines fahrzeugseitigen Lagerabschnitts und einen Anflanschbereich zur Anordnung des Motors am Motorträger umfasst.

Ein derartiger Motorträger ist beispielsweise aus der DE 10 2009 031 335 A1 vorbekannt. Weitere Motorträger sind aus der JP2012-117626A, DE 10 2010024903 A1 oder der DE 10 2008 038 519 A1 bekannt. Weitere Merkmale des Oberbegriffs des Anspruchs 1 sind aus der DE 10 2010 024903 A1 und der DE 196 54 189 A1 vorbekannt. Aus der EP 2 119 937 A1 ist ein Motorträger mit den Merkmalen des Oberbegriffs des Patentanspruchs 1 bekannt.

Der vorliegenden Erfindung liegt die Aufgabe zugrunde, einen Motorträger bereitzustellen, der zum einen leicht baut, kostengünstig herstellbar ist und zudem die an einem Motorträger gerichteten Anforderungen erfüllt.

Diese Aufgabe wird mit einem Motorträger mit den Merkmalen des Anspruchs 1 gelöst. Hierdurch wird erreicht, dass über das Gummielement am Motor und am Fahrzeug auftretende Schwingungen gedämpft werden. Dennoch ist eine sichere Anordnung des Motors am Träger aufgrund des Einlegeelements möglich. Das Einlegeelement ist dabei vorzugsweise fest in das Gummielement eingebettet, wobei es vorzugsweise keinen Berührkontakt mit dem vom Gummielement verschiedenen Grundkörper aufweist.

Der Grundkörper ist dabei vorzugsweise aus einem Kunststoff und insbesondere aus einem verstärkten Kunststoff, beispielsweise aus einem glasfaser- oder kohlefaserverstärktem Kunststoff. Hierdurch kann erreicht werden, dass der Motorträger vergleichsweise leicht baut.

Das Einlegeelement wiederum kann aus vorzugsweise einem metallischen Material sein. Ebenfalls ist denkbar, dass das Einlegeelement aus einem keramischen Material ist.

Zur dauerhaften und funktionssicheren Einbettung des Einlegeelements in das Gummielement ist vorgesehen, dass das Einlegeelement in das Gummielement einvulkanisiert und/oder eingegossen ist. Hierdurch kann eine unlösbare Verbindung zwischen Einlegeelement und Gummielement bereitgestellt werden.

Das Einlegeelement sieht seinerseits einen Befestigungsabschnitt in Form eines Bolzens vor, mit dem der Motor am Motorträger sicher befestigt werden kann. Der Befestigungsabschnitt kann dabei ein Gewinde umfassen, und als Gewindebolzen ausgebildet sein.

Das Einlegeelement weist ferner einen Anlageabschnitt zur motor- und/oder fahrzeugseitigen Anlage auf. Hierdurch kann eine positionsgenaue und lagedefinierte Anlage des Motors und Fahrzeugs am Motorträger gewährleistet werden. Der Anlageabschnitt ist dabei vorzugsweise unmittelbar angrenzend an den Gewindeabschnitt vorgesehen.

Der Grundkörper sieht vorteilhafterweise eine Aussparung zur Aufnahme des Gummielements auf. Die Aussparung ist vorzugsweise als Durchgangsloch oder als Sackloch, das heißt sie weist lediglich eine frei zugängliche Seite auf, ausgebildet. Im Falle des Sacklochs ist das Einlegeelement vorzugsweise im Bereich dieser frei zugänglichen Seite der Aussparung bzw. des in der Aussparung vorgesehenen Gummielements vorgesehen.

Es hat sich gezeigt, dass es vorteilhaft ist, wenn die Aussparung zylindrisch, und insbesondere kreiszylindrisch ausgebildet ist und sich entlang einer Längsachse erstreckt. Das Einlegeelement ist dabei vorzugsweise entlang der Längsachse in der Aussparung bzw. in dem in der Aussparung vorgesehenen Gummielement vorgesehen.

Die Aussparung sieht zudem vorteilhafterweise Hinterschnittabschnitte zur Halterung des Gummielements in der Aussparung vor. Die Hinterschnittabschnitte können dabei als Rillen, Zacken, Widerhaken oder Nuten ausgebildet sein.

Vorzugsweise sind die Hinterschnittabschnitte derart, dass ein Herausgleiten oder Ziehen des Gummielements aus der Aussparung entlang der Längsachse nur erschwert oder nicht möglich ist. Das Gummielement kann dabei auch in die Aussparung eingegossen sein. Ferner ist vorteilhaft, wenn der Grundkörper um die Aussparung herum Hohlräume und die Hohlräume begrenzende Stegabschnitte aufweist. Hierdurch kann sich insbesondere eine Gewichtsersparnis ergeben ohne dass die Stabilität des Motorträgers verschlechtert wird.

Die Stegabschnitte können dabei insbesondere radial oder senkrecht zur Längsachse der Aussparung verlaufend ausgebildet sein. Hierdurch können insbesondere Kräfte, die quer zur Längsachse wirken, vorteilhaft in den Grundkörper abgeleitet werden. Zur sicheren Befestigung des Motorträgers am Fahrzeug ist vorteilhaft, wenn im Anschlussbereich Metallbuchsen zur Aufnahme von Befestigungsschrauben vorgesehen sind. Damit kann ein sicheres Anschrauben des Trägers am Fahrzeug erfolgen.

Eine vorteilhafte Ausführungsform ergibt sich dann, wenn der Anschlussbereich senkrecht zum Flanschbereich verlaufend angeordnet ist.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine perspektivische Ansicht eines erfindungsgemäßen Motorträgers;
- Figur 2: den Motorträger gemäß Figur 1 ohne Gummielement und ohne Einlegeelement;
- Figur 3: den Motor gemäß Figur 1 in Vorderansicht;
- Figur 4: einen Schnitt durch den Motorträger gemäß Figur 1 entlang der Linie IV in Figur 3;
- Figur 5: einen Schnitt entlang der Linie V in Figur 3; und
- Figur 6: einen der Figur 4 entsprechenden Schnitt durch eine andere Ausführungsform.

Der in den Figuren gezeigte Motorträger 10 dient zur Befestigung eines Motors in einem Fahrzeug. Der Motorträger 10 weist einen Grundkörper 12 auf, der einen Anschlussbereich 14 zur Anlage eines fahrzeugseitigen Lagerabschnitts und einen Anflanschbereich 16 zur Anordnung des Motors am Motorträger 10 umfasst.

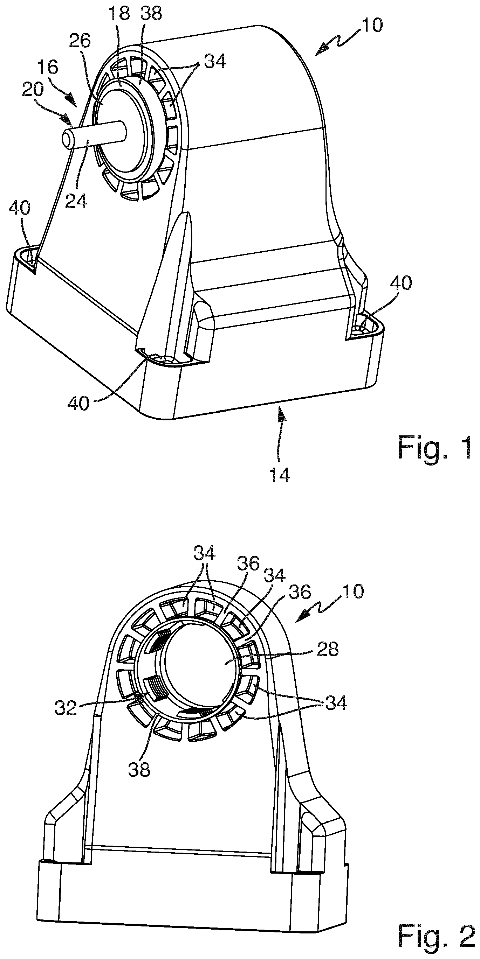

Wie insbesondere aus Figuren 1, 3 und 4 deutlich wird, wird der Anflanschbereich 16 von einem Gummielement 18 gebildet, wobei im Gummielement 18 ein Einlegeelement 20 vorgesehen ist. Der Grundkörper 12 ist vorzugsweise aus verstärktem Kunststoff. Das Einlegeelement 20 ist vorteilhafterweise aus einem metallischen Werkstoff.

Zur sicheren Anordnung des Einlegeelements 20 im Gummielement 18 ist das Einlegeelement 20 in das Gummielement 18 einvulkanisiert. Das Einlegeelement 20 sieht dabei einen innerhalb des Gummielements 18 vorgesehenen Befestigungsflansch 22 vor. Das Einlegeelement 20 sieht ferner einen frei zugänglichen Befestigungsabschnitt 24 in Form eines Gewindebolzens vor. Der Abschnitt 24 kann zur Befestigung des Motors in eine vorgesehene Bohrung eingeführt werden und der Motor kann durch eine auf den Abschnitt 24 aufgeschraubte Mutter am Motorträger 10 gesichert werden.

Zur sicheren Anlage des Motors am Motorträger 10 sieht das Einlegeelement 20 einen flanschartigen Anlageabschnitt 26 vor.

Wie aus den Figuren deutlich wird, weist der Grundkörper 12 eine zylindrische Aussparung 28 auf. Die zylindrische Aussparung 28 weist lediglich eine offene Seite auf, nämlich die Seite, an der der zugängliche Abschnitt 24 des Einlegeelements 20 vorgesehen ist. Ansonsten ist die Aussparung 28 voll umfänglich umschlossen.

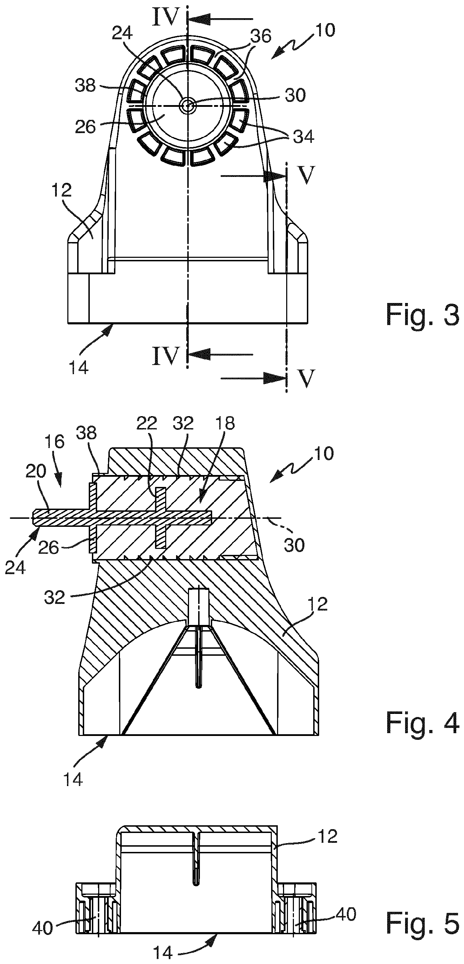

Wie aus den Figuren 3 und 4 deutlich wird, erstreckt sich die Aussparung 28 entlang deren Längsachse 30, in welcher auch die Haupterstreckungsrichtung des Einlegeelements 20 liegt.

Aus den Figuren 3 und 4 wird auch deutlich, dass die Aussparung 28 auf ihrer nach innen gewandten Oberfläche zackenartig ausgebildete Hinterschnittabschnitte 32 aufweist, die in die Oberfläche des Gummielements 18 einschneiden. Dadurch wird eine sichere Verankerung des Gummielements 18 in der Aussparung 28 gewährleistet. Das Gummielement 18 kann vorteilhafterweise in die Aussparung 28 samt Einlegeelement 20 eingegossen sein.

Wie ferner aus den Figuren deutlich wird, sind am Grundkörper 12 um die Aussparung 28, parallel zur Längsachse 30 verlaufende Hohlräume 34 vorgesehen, die durch rippenartige Stegabschnitte 36 voneinander getrennt sind. Die Stegabschnitte 36 erstrecken sich dabei bezüglich der Längsachse 30 in radialer Richtung. Auch zwischen der Aussparung 28 und den Hohlräumen 34 ist ein konzentrisch um die Längsachse 30 verlaufender, hülsenartiger Stegabschnitt 38 vorgesehen. Die Innenoberfläche dieses Stegabschnitts 38 bildet dabei die Innenoberfläche der Aussparung 28.

Aus dem Schnitt gemäß Figur 5 wird deutlich, dass der Grundkörper im Anflanschbereich 14 insgesamt vier Metallbuchsen 40 aufweist, in welche Schrauben zur Befestigung des Motorträgers 10 am Fahrzeug eingeführt werden können.

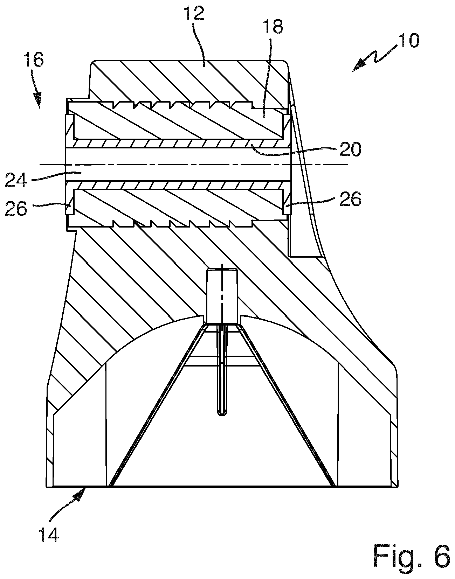

Bei der in der Figur 6 gezeigten Ausführungsform sind der den Figuren 1 bis 5 entsprechende Bauteile mit entsprechenden Bezugszeichen versehen. Im Unterschied zu der Ausführungsform der Figuren 1 bis 5 ist der Befestigungsabschnitt 24 nicht als Gewindebolzen, sondern als sich durch das Einlegeelement erstreckende Buchse ausgebildet, in welche zur Befestigung ein Bolzen eingeführt werden kann. Denkbar wäre auch eine Gewindebuchse, insbesondere auch eine einseitig geschlossene Gewindebuchse zur Aufnahme eines Gewindebolzens.

## Patentansprüche

1. Motorträger (10) zum Befestigen eines Motors in einem Kraftfahrzeug, mit einem Grundkörper (12), wobei der Grundkörper (12) einen Anschlussbereich (14) zur Anlage eines fahrzeugseitigen Lagerabschnitts und einen Anflanschbereich (16) zur Anordnung des Motors am Motorträger (10) umfasst, wobei der Anflanschbereich (16) von einem am Grundkörper angeordneten Gummielement (18) und einem im Gummielement (18) vorgesehenen Einlegeelement (20) gebildet wird, wobei das Einlegeelement (20) in das Gummielement eingegossen und/oder einvulkanisiert ist und dass das Einlegeelement (20) ein Anlageabschnitt (26) zur motorseitigen Anlage aufweist, wobei das Einlegeelement (20) einen als Bolzen ausgebildeten Befestigungsabschnitt (24) zur motorseitigen Befestigung aufweist, **dadurch gekennzeichnet, dass** der Anlageabschnitt (26) flanschartig ausgebildet ist, sich quer zur Längserstreckung des Einlegeelements (20) erstreckt und dieses in Querrichtung überragt.

2. Motorträger (10) nach Anspruch 1, **dadurch gekennzeichnet, dass** der Grundkörper (12) aus einem Kunststoff und insbesondere aus einem verstärkten Kunststoff hergestellt ist.

3. Motorträger (10) nach Anspruch 1 oder 2, **dadurch gekennzeichnet, dass** das Einlegeelement (20) aus Metall oder Keramik hergestellt ist.

4. Motorträger (10) nach Anspruch 1, 2 oder 3, **dadurch gekennzeichnet, dass** der Befestigungsabschnitt (24) einen Gewindeabschnitt (24) umfasst.

5. Motorträger (10) nach einem der vorhergehenden Ansprüche, **dadurch gekennzeichnet, dass** das Einlegeelement (20) einen wenigstens einen innerhalb des Gummielements vorgesehenen Befestigungsflansch (22) aufweist, der sich quer zur Längserstreckung des Einlegeelements (20) erstreckt.

6. Motorträger (10) nach einem der vorhergehenden Ansprüche, **dadurch gekennzeichnet, dass** der Grundkörper (12) eine Aussparung (28) zur Aufnahme des Gummielements (18) aufweist.

7. Motorträger (10) nach Anspruch 6, **dadurch gekennzeichnet, dass** die Aussparung (28) zylindrisch ist und sich entlang einer Längsachse (30) erstreckt.

8. Motorträger (10) nach Anspruch 6 oder 7, **dadurch gekennzeichnet, dass** in der Aussparung (28) Hinterschnittabschnitte (32) zur Halterung des Gummielements (18) vorgesehen sind.

9. Motorträger (10) nach einem der Ansprüche 6, 7 oder 8, **dadurch gekennzeichnet, dass** der Grundkörper (12) um die Aussparung (28) herum Hohlräume (34) und die Hohlräume begrenzende Stegabschnitte (36, 38) aufweist.

10. Motorträger (10) nach Anspruch 9, **dadurch gekennzeichnet, dass** die Stegabschnitte (36, 38) radial zur Längsachse (30) der Aussparung (28) und/oder die Längsachse (30) der Aussparung (28) konzentrisch umgebend verlaufend ausgebildet sind.

11. Motorträger (10) nach einem der vorhergehenden Ansprüche, **dadurch gekennzeichnet, dass** im Anschlussbereich (14) Metallbuchsen (40) zur Aufnahme von Befestigungsschrauben vorgesehen sind.

12. Motorträger (10) nach einem der vorhergehenden Ansprüche, **dadurch gekennzeichnet, dass** der Anschlussbereich (14) senkrecht zum Flanschbereich (16) verlaufend angeordnet ist.

## Claims

1. An engine mount (10) for securing an engine in a motor vehicle, having a base body (12), wherein the base body (12) includes an attachment region (14) for supporting a bearing portion on the side toward the vehicle and includes a flanging region (16) for locating the engine on the engine mount (10), wherein the flanging region (16) is formed by a rubber element (18) located on the base body and by an inlaid element (20) provided in the rubber element (18), and that the inlaid element (20) is cast or vulcanized into the rubber element, wherein the inlaid element (20) has an abutment portion (26) for contact with the engine, wherein the inlaid element (20) has a securing portion (24) for securing the engine, **characterized in that** the abutment portion (26) is embodied in flangelike fashion, extends transversely to the longitudinal extent of the inlaid element (20), and protrudes from the inlaid element in the transverse direction.

2. The engine mount (10) of claim 1, **characterized in that** the base body (12) is produced from a plastic and in particular from a reinforced plastic.

3. The engine mount (10) of claim 1 or 2, **characterized in that** the inlaid element (20) is produced from metal or ceramic.

4. The engine mount (10) of claim 1, 2 or 3, **characterized in that** the securing portion (24) includes a threaded portion (24).

5. The engine mount (10) of one of the foregoing claims, **characterized in that** the inlaid element (20) has a securing flange (22) provided inside the rubber element, which flange extends transversely to the longitudinal extent of the inlaid element (20).

6. The engine mount (10) of one of the foregoing claims, **characterized in that** the base body (12) has a recess (28) for receiving the rubber element (18).

7. The engine mount (10) of claim 6, **characterized in that** the recess (28) is cylindrical and extends along a longitudinal axis (30).

8. The engine mount (10) of claim 6 or 7, **characterized in that** undercut portions (32) for clasping the rubber element (18) are provided in the recess (28).

9. The engine mount (10) of one of claims 6, 7 or 8, **characterized in that** the base body (12) has hollow chambers (34) around the recess, and the hollow chambers define land portions (36, 38).

10. The engine mount (10) of claim 9, **characterized in that** the land portions (36, 38) are embodied as extending radially to the longitudinal axis (30) of the recess (28) and/or concentrically surrounding the longitudinal axis (30) of the recess (28).

11. The engine mount (10) of one of the foregoing claims, **characterized in that** metal bushes (40) for receiving fastening screws are provided in the attachment region (14).

12. The engine mount (10) of one of the foregoing claims, **characterized in that** the attachment region (14) is located extending perpendicular to the flange region (16).

## Revendications

1. Support de moteur (10) pour la fixation d'un moteur dans un véhicule automobile, comprenant un corps de base (12), le corps de base (12) comportant une zone de raccordement (14) pour l'appui d'une section de palier côté véhicule et une zone de bridage (16) pour l'agencement du moteur sur le support de moteur (10), la zone de bridage (16) étant formée par un élément en caoutchouc (18) agencé sur le corps de base et un élément d'insertion (20) prévu dans l'élément en caoutchouc (18), l'élément d'insertion (20) étant coulé et/ou vulcanisé dans l'élément en caoutchouc et l'élément d'insertion (20) comprenant une section d'appui (26) pour l'appui côté moteur, l'élément d'insertion (20) comprenant une section de fixation (24) réalisée sous la forme d'un boulon pour la fixation côté moteur, **caractérisé en ce que** la section d'appui (26) est formée côté bride, s'étend transversalement à la direction longitudinale de l'élément d'insertion (20) et fait saillie de ce dernier dans le sens transversal.

2. Support de moteur (10) selon la revendication 1, **caractérisé en ce que** le corps de base (12) est fabriqué à partir d'une matière plastique et en particulier à partir d'une matière plastique renforcée.

3. Support de moteur (10) selon la revendication 1 ou 2, **caractérisé en ce que** l'élément d'insertion (20) est fabriqué à partir de métal ou de céramique.

4. Support de moteur (10) selon la revendication 1, 2 ou 3, **caractérisé en ce que** la section de fixation (24) comprend une section filetée (24).

5. Support de moteur (10) selon l'une quelconque des revendications précédentes, **caractérisé en ce que** l'élément d'insertion (20) comprend au moins une bride de fixation (22) qui est prévue à l'intérieur de l'élément en caoutchouc et qui s'étend transversalement à la direction longitudinale de l'élément d'insertion (20).

6. Support de moteur (10) selon l'une quelconque des revendications précédentes, **caractérisé en ce que** le corps de base (12) présente un évidement (28) pour la réception de l'élément en caoutchouc (18).

7. Support de moteur (10) selon la revendication 6, **caractérisé en ce que** l'évidement (28) est cylindrique et s'étend le long d'un axe longitudinal (30).

8. Support de moteur (10) selon la revendication 6 ou 7, **caractérisé en ce que** des sections de dégagement (32) destinées à retenir l'élément en caoutchouc (18) sont prévues dans l'évidement (28).

9. Support de moteur (10) selon l'une quelconque des revendications 6, 7 ou 8, **caractérisé en ce que** le corps de base (12) comprend des cavités (34) autour de l'évidement (28) et des sections formant pont (36, 38) délimitant les cavités.

10. Support de moteur (10) selon la revendication 9, **caractérisé en ce que** les sections formant pont (36, 38) s'étendent radialement par rapport à l'axe longitudinal (30) de l'évidement (28) et/ou de manière à entourer de façon concentrique l'axe longitudinal (30) de l'évidement (28).

11. Support de moteur (10) selon l'une quelconque des revendications précédentes, **caractérisé en ce que** des douilles métalliques (40) destinées à recevoir des vis de fixation sont prévues dans la zone de raccordement (14).

12. Support de moteur (10) selon l'une quelconque des revendications précédentes, **caractérisé en ce que** la zone de raccordement (14) est agencée de manière à s'étendre perpendiculairement à la zone de bride (16).
